# EUROPÄISCHE PATENTSCHRIFT

(11) **EP 0 946 251 B1**
(45) Veröffentlichungstag und Bekanntmachung des Hinweises auf die Patenterteilung: **24.04.2002**
(21) Anmeldenummer: 97952706.6
(22) Anmeldetag: 04.12.1997
(51) Int. Cl.: B01D 45/00, B01D 45/12, B04C 3/00, B01D 53/50

(54) **VORRICHTUNG ZUM ABSCHEIDEN VON FLÜSSIGKEITEN UND/ODER FESTSTOFFEN ODER GASEN MIT ANDEREM SPEZIFISCHEM GEWICHT AUS EINEM GASSTROM**
DEVICE FOR SEPARATING FROM A GAS STREAM LIQUIDS AND/OR SOLID MATTERS OR GASES HAVING A DIFFERENT SPECIFIC WEIGHT
DISPOSITIF POUR LA SEPARATION DE LIQUIDES ET/OU DE MATIERES SOLIDES OU DE GAZ AYANT UN AUTRE POIDS SPECIFIQUE, A PARTIR D'UN FLUX GAZEUX

(30) Priorität: 06.12.1996 DE 29621183 U
(43) Veröffentlichungstag der Anmeldung: 06.10.1999
(60) Teilanmeldung: 01124551.1
(73) Patentinhaber: Eder Maschinenfabrik GmbH & Co.KG, 84048 Mainburg (DE)
(72) Erfinder: THEILER, Anton, D-94577 Winzer (DE)
(74) Vertreter: Beck, Alexander, Dipl.-Ing.
(86) Internationale Anmeldenummer: DE9702834
(87) Internationale Veröffentlichungsnummer: WO9824533

(56) Entgegenhaltungen:
- DE-C- 849 349
- FR-A- 2 147 545
- GB-A- 2 084 904
- GB-A- 2 098 514
- US-A- 3 972 698
- US-A- 4 378 289
- US-A- 4 859 347

## Beschreibung

Die vorliegende Erfindung betrifft eine Vorrichtung zum Abscheiden von Flüssigkeiten und/oder Feststoffen oder Gasen mit anderem spezifischem Gewicht aus einem Gasstrom.

Zum Abscheiden von Flüssigkeiten und/oder Feststoffen aus einem Gasstrom sind bereits Filter bekannt, bei denen der zu reinigende Gasstrom durch einen Filterkörper hindurchtritt. Diese Vorrichtungen weisen jedoch den Nachteil auf, daß ein nicht unerheblicher Energieaufwand erforderlich ist, um den Gasstrom durch den Filterkörper hindurchzutreiben. Darüber hinaus wird der Filterkörper mit der Zeit verstopft und muß dann gereinigt oder ausgetauscht werden. Dadurch ergibt sich ein sehr hoher Wartungsaufwand, außerdem ist die Vorrichtung dann nicht dauernd verfügbar.

Zur Trennung von Gasen mit anderem spezifischem Gewicht aus einem Gasstrom, der ein Gasgemisch führt, sind bereits Trenndüsenentmischungssysteme bekannt, wie sie beispielsweise zur Trennung der Uranisotope 235 und 238 dienen. Diese Vorrichtungen sind jedoch in ihrem Aufbau sehr kompliziert und sehr aufwendig.

Der zur vorliegenden Erfindung nächstgelegene Stand der Technik ergibt sich aus der DE C 849 349. Aus dieser Veröffentlichung sind bereits Vorrichtungen, die zum Abscheiden von Flüssigkeiten und/oder Feststoffen oder Gasen mit anderen spezifischem Gewicht aus einem Gasstrom geeignet sind, mit einem Gaseintritts- und einem Gasaustrittsanschluß und mit mindestens einer Hilfsgaseintrittsöffnung, die tangential zur Mantelfläche des rohrförmigen Hohlraums in der Nähe des Gaseintrittsanschlusses mündet, bekannt. Diese Merkmale bilden somit den Oberbegriff des vorliegenden Hauptanspruchs.

Dieser Stand der Technik zeigt jedoch nur Ausführungsformen mit einem geraden oder sich konisch verengenden Hohlraum. Durch den Eintritt des Hilfsgases bei einem geraden Hohlraum oder durch die Verengung des Hohlraums selbst, entsteht bei diesem Stand der Technik ein Gegendruck. Dadurch ist es gemäß dem Stand der Technik notwendig, zusätzliche Energie und meist auch eine zusätzliche, aufwendig herzustellende und zu wartende Vorrichtung zur Förderung des Gasstroms vorzusehen. Dadurch entsteht ein erheblicher zusätzlicher Energie-, Konstruktion- und Wartungsaufwand.

Die US-A 4,859,347 zeigt eine ähnliche Vorrichtung. Dabei folgt einem ersten sich konisch verengenden, ein zweiter gerader Abschnitt und schließlich ein dritter, sich konisch erweiternder Abschnitt. Dieser letzte Abschnitt kann aber in seiner Funktion nicht mit dem sich konisch erweiternden Abschnitt des Erfindungsgegenstandes verglichen werden, da die leichte Phase gem. diesem Stand der Technik bereits am Anfang dieses Abschnitts in der Spitze des Ventilkegels abgetrennt wird. In diesem Abschnitt findet daher keine Abscheidung wie beim Anmeldungsgegenstand statt. Darüber hinaus wird auch hier durch die vorher erfolgende Verengung des Querschnitts ein entsprechender Staudruck gegen den Durchfluß des zu reinigenden Gases aufgebaut.

Es ist daher Aufgabe der vorliegenden Erfindung, eine Vorrichtung zum Abscheiden von Flüssigkeiten und/oder Feststoffen oder Gasen mit anderem spezifischem Gewicht aus einem Gasstrom zu schaffen, die einen nur geringen Energieaufwand erfordert, einfach herzustellen ist, und nur geringer Wartung bedarf.

Erfindungsgemäß wird diese Aufgabe dadurch gelöst, daß der Hohlraum sich vom Gaseintrittsanschluß zum Gasaustrittsanschluß konisch erweitert.

Diese erfindungsgemäße Filter hat den Vorteil, daß es lageunabhängig arbeitet und bei im Verhältnis zum Durchfluß ausreichender Baugröße keinen Differenzdruck (Druckverlust) aufweist. Bei entsprechender Dimensionierung kann das Filter das zu reinigende Gas selbst ansaugen und abgeschiedene Flüssigkeit oder eine abgeschiedene Gasfraktion mit höhrerem Molekulargewicht selbsttätig ausdrücken.

Es ist dabei bevorzugt, daß die Hilfsgaseintrittsöffnung gegenüber der Senkrechten zu der Mittelachse des Hohlraums in Richtung auf den Gasaustrittsanschluß hin geneigt ist, so daß das Hilfsgas in einer schraubenförmigen Bahn entlang der Mantelfläche des Hohlraums auf den Gasaustrittsanschluß hin geführt ist.

Dadurch wird die Ansaugwirkung am Gaseintrittsanschluß verbessert und außerdem ein Ausströmen von Hilfsgas aus dem Gaseintrittsanschluß vermieden.

Weiter ist es besonders bevorzugt, in dem Hohlraum einen Füllkörper mit geringerem Durchmesser und gleicher Konizität anzuordnen, so daß der Hohlraum die Form eines hohlen Kegelstumpfes mit etwa konstanter Wanddicke aufweist. Dadurch wird verhindert, daß sich in der Nähe des Gasaustrittsanschlusses in der Mitte der Luftsäule ein Unterdruck bildet, der Gas aus dem Gasaustrittsbereich zurücksaugen könnte.

Es ist dabei besonders bevorzugt, daß der Füllkörper sich fast bis auf die Höhe des Hilfsgaseintrittsanschlusses erstreckt. Dadurch wird die Abscheidewirkung weiter verbessert.

Als besonders vorteilhaft hat sich eine Ausführungsform erwiesen, bei der der Füllkörper durch ein Dichtungselement in dem Hohlraum befestigt ist, welches den Hohlraum in der Nähe des Gasaustrittsanschlusses dicht abschließt, und bei dem der Füllkörper hohl und zum Gasaustrittsanschluß hin offen ausgebildet ist und mindestens eine seitliche Durchtrittsöffnung für das Gas aufweist. Durch diese Konstruktion wird erreicht, daß die austretende Gasfraktion möglichst rein ist.

Es ist dabei besonders bevorzugt, daß die Durchtrittsöffnung (en) die Form eines parallel zu der Mittelachse des Füllkörpers verlaufenden länglichen Schlitzes aufweisen. Dadurch kann der Strömungswiderstand für den Gasstrom minimiert werden.

Besonders bevorzugt ist es, das Dichtungselement als elektrischen Isolator auszubilden, und eine Gleichspannungsversorgung vorzusehen, die den Füllkörper gegenüber der Wand des Hohlraums elektrostatisch auflädt. Diese Ausführungsform eignet sich besonders zum Abscheiden von Flüssigkeitströpfchen oder Feststoffpartikeln aus dem Gasstrom. Es ergibt sich nämlich dabei eine zusätzliche elektrostatische Reinigung. Diese Technik eignet sich besonders, wenn der gereinigte Gasstrom nach dem Gasaustritt einer Verbrennung oder einem Abgaskatalysator zugeführt wird. Die durch die elektrostatische Aufladung entstehenden Stickoxyde und Ozongase sind bei einer nachfolgenden Verbrennung nämlich sogar von Vorteil.

Zum Abscheiden von Flüssigkeiten und Gasen mit anderem spezifischem Gewicht ist es besonders bevorzugt, die Austrittsöffnung für die abgeschiedenen Flüssigkeiten direkt vor dem Dichtungselement in der Wand des Hohlraums vorzusehen.

Wenn nur eine Durchtrittsöffnung in dem Füllkörper vorgesehen ist, ist es besonders bevorzugt, die Austrittsöffnung gegenüber der der Durchtrittsöffnung entgegengesetzten Seite des Füllkörpsers anzuordnen.

Um eine Ausströmung des Hilfsgases aus dem Gaseintrittsanschluß noch sicherer auszuschliessen, ist es besonders bevorzugt, am Gaseintrittsanschluß eine Blende oder Stufe vorzusehen, die den Querschnitt des Hohlraums verringert.

Es ist besonders bevorzugt, die Hilfsgaseintrittsöffnung mit einer Düse zu versehen, da dadurch eine hohe Eintrittsgeschwindigkeit des Hilfsgases in den Hohlraum und damit eine gute Abscheidewirkung mit geringen Hilfsgasmengen erzielt werden kann.

Eine konstruktiv besonders einfache Lösung der erfindungsgemäßen Aufgabe ergibt sich, wenn Gaseintritts- und Gasaustrittsanschluß jeweils zentral in je einer Deckfläche des kegelstumpfförmigen Hohlraums angeordnet sind.

Bei den bisherigen Versuchen haben sich folgende Dimensionierungen als besonders vorteilhaft erwiesen:

Der Winkel α zwischen der Mittelachse der Hilfsgaseintrittsöffnung und der auf die Gasaustrittsöffnung zeigenden Mittelachse des Hohlraums von 90,5 Grad bis 100 Grad, vorzugsweise 90,5 Grad bis 92,0 Grad.

Der Winkel β der Steigung der konisch ausgebildeten Teile (Hohlraum und eventuell Füllkörper) mit 0,5 bis 15 Grad, vorzugsweise 1 bis 5 Grad.

Wenn mit der erfindungsgemäßen Vorrichtung beispielsweise Dieselruß aus den Verbrennungsabgasen von Dieselmotoren abgeschieden werden soll, ist es besonders bevorzugt, an der Mantelfläche des Hohlraums elektrische Heizwiderstände zum Abbrennen von den aus dem Gasstrom ausgeschiedenen Feststoffen vorzusehen.

Es ist dabei besonders bevorzugt, die elektrischen Heizwiderstände als in Strömungsrichtung des Hilfsgases verlaufende, schraubenförmige Heizwicklungen auszubilden. Die Heizwiderstände wirken dabei auch noch als "Leitbleche" für die Strömung des Gemisches aus Hilfsgas und zu reinigendem Gas.

Weiter kann ein Absaugrohr entlang der Mittelachse des Hohlraums von dem Gasaustrittsanschluß her in den Hohlraum hineinragen. Auf diese Weise kann eine besonders reine leichte Fraktion des Gasgemisches abgesaugt werden.

Sofern bereits ein Füllkörper mit einem inneren Hohlraum vorgesehen ist, erstreckt sich das Absaugrohr vorzugsweise in den Hohlraum des Füllkörpers und im Inneren des Füllkörpers bis in die Nähe des gaseintrittsseitigen Endes des Füllkörpers. Hierdurch kann die Reinigungswirkung weiter verbessert werden.

Die Reinigungswirkung kann noch weiter verbessert werden, indem im gaseintrittsseitigen Drittel der Länge der seitlichen Durchtrittsöffnung(en) eine Abdichtung zwischen Füllkörper und Absaugrohr vorgesehen wird.

Eine besonders gute Reinigungswirkung kann erzielt werden, wenn der Füllkörper an seinem vorderen Ende mit einem Kopf versehen ist, der durch eine Einschnürung von dem übrigen Füllkörper abgesetzt ist.

Es ist dabei besonders bevorzugt, wenn die Einschnürung einen Durchmesser aufweist, der weniger als 1/3 des Durchmessers des Kopfes beträgt.

Ein besonders guter Wirkungsgrad der Vorrichtung wird erzielt, wenn der Durchmesser des Kopfes größer ist als der Durchmesser des Füllkörpers in seinem konischen Bereich.

Bei einer bevorzugten Ausführungsform der Erfindung ist der Kopf als flacher Zylinder ausgebildet, dessen Mantelfläche die gleiche Konizität aufweist, wie der Füllkörper, wobei der Kopf in einem flachen Kegel nach vorne ausläuft.

Im folgenden wird die Erfindung anhand der in den beigefügten Zeichnungen dargestellten Ausführungsbeispiele näher erläutert:

Es zeigen:
**Figur 1** eine Schnittdarstellung einer erfindungsgemäßen Vorrichtung, wie sie vorzugsweise zum Abscheiden von Flüssigkeiten verwendet werden kann;
**Figur 2** eine Detaildarstellung der Hilfsgaseintrittsöffnung der Figur 1 senkrecht zur Mittelachse des Hohlraums geschnitten;
**Figur 3** eine erfindungsgemäße Vorrichtung zum Abscheiden von Gasen mit anderem spezifischem Gewicht aus einem Gasstrom entlang der Mittelachse des Hohlraums geschnitten;
**Figur 4** eine Detaildarstellung des abgedichteten Anschlusse für das Absaugrohr für leichte Fraktionen aus Figur 3;
**Figur 5** eine vergrößerte Detaildarstellung aus der Figur 3, bei der die Hilfsgaseintrittsöffnung in senkrechter Draufsicht dargestellt ist;
**Figur 6** eine Detaildarstellung der Öffnung zur Entnahme der schwereren Gasfraktion aus Figur 3;
**Figur 7** eine Schnittdarstellung senkrecht zu der Mittelachse der Vorrichtung der Figur 3 in Höhe der Hilfsgaseintrittsöffnung;
**Figur 8** ein vergrößertes Detail der Figur 7, welches die Hilfsgaseintrittsöffnung darstellt;
**Figur 9** die erfindungsgemäße Vorrichtung zur Abscheidung von Gasen mit anderem Molekulargewicht in ihrer Verwendung in einem Gesamtsystem zur Gasfraktionierung, geschnitten entlang der Mittelachse des Hohlraums und parallel zur Mittelachse des Hilfsgaseintrittsanschlusses;
**Figur 10** ein Detail der Figur 9 hinsichtlich des Hilfsgaseintrittsanschlusses;
**Figur 11** eine Darstellung einer besonders bevorzugten Ausführungsform der vorliegenden Erfindung von der Seite und von außen, wobei die Konturen der innenliegenden Teile gestrichelt dargestellt sind;
**Figur 12** eine räumliche, perspektivische Darstellung des Füllkörpers der Vorrichtung gem. Fig. 11;
**Figur 13** eine Darstellung des Füllkörpers der Figur 12 von der Seite mit gestrichelter Eintragung der Konturen des inneren Hohlraums;
**Figur 14** die Funktion der Vorrichtung gem. Fig. 11;
**Figur 15** eine Detaildarstellung der Strömungsverhältnisse um den Füllkörper in Fig. 14;
**Figur 16** eine erfindungsgemäße Hilfsgaszuführung wenn dem Hilfsgas ein zusätzlicher Stoff beigemischt werden soll mit entsprechenden Detaildarstellungen;
**Figur 17** eine Schnittdarstellung einer erfindungsgemäßen Vorrichtung mit zwei nebeneinander angeordneten Hilfsgaszuführungen; und
**Figur 18** eine erfindungsgemäße Vorrichtung mit zwei untereinander angeordneten Hilfsgaszuführungen.

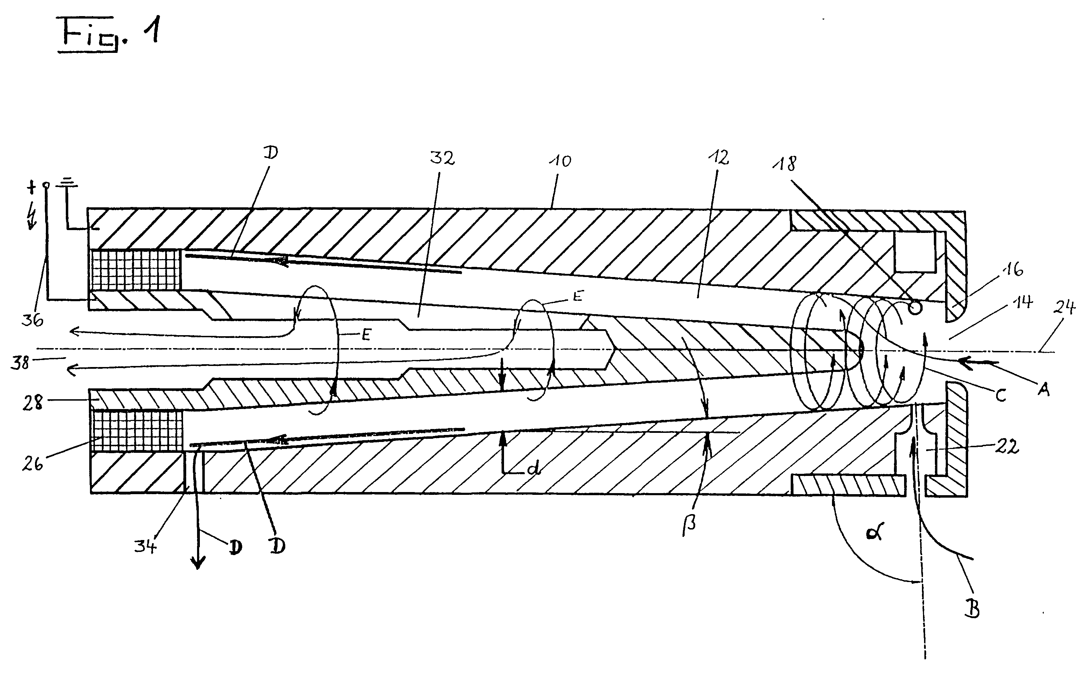

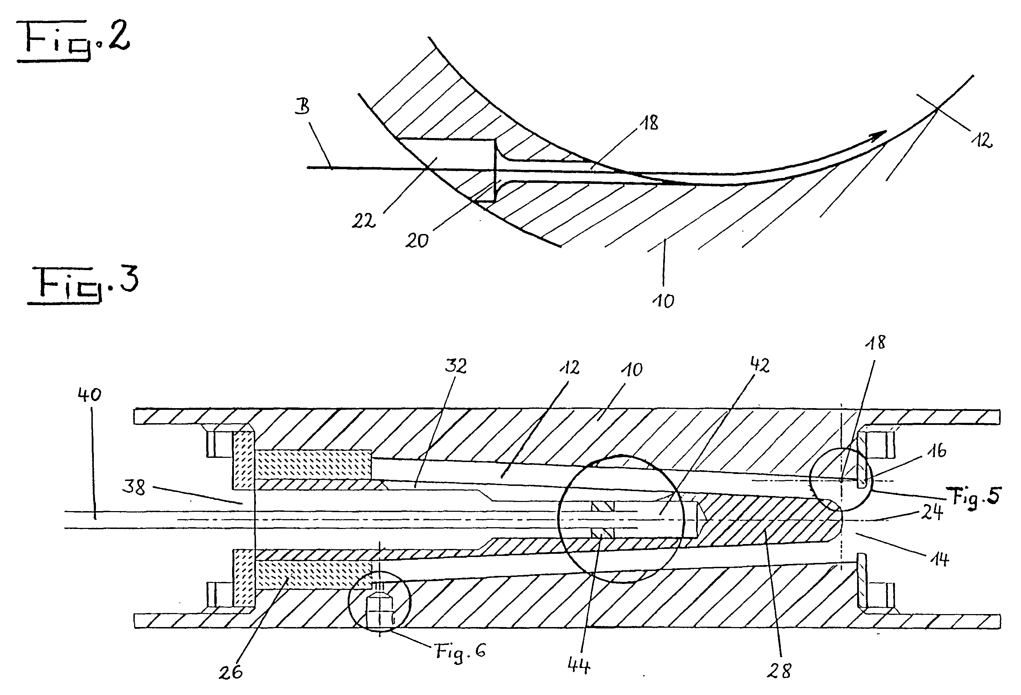

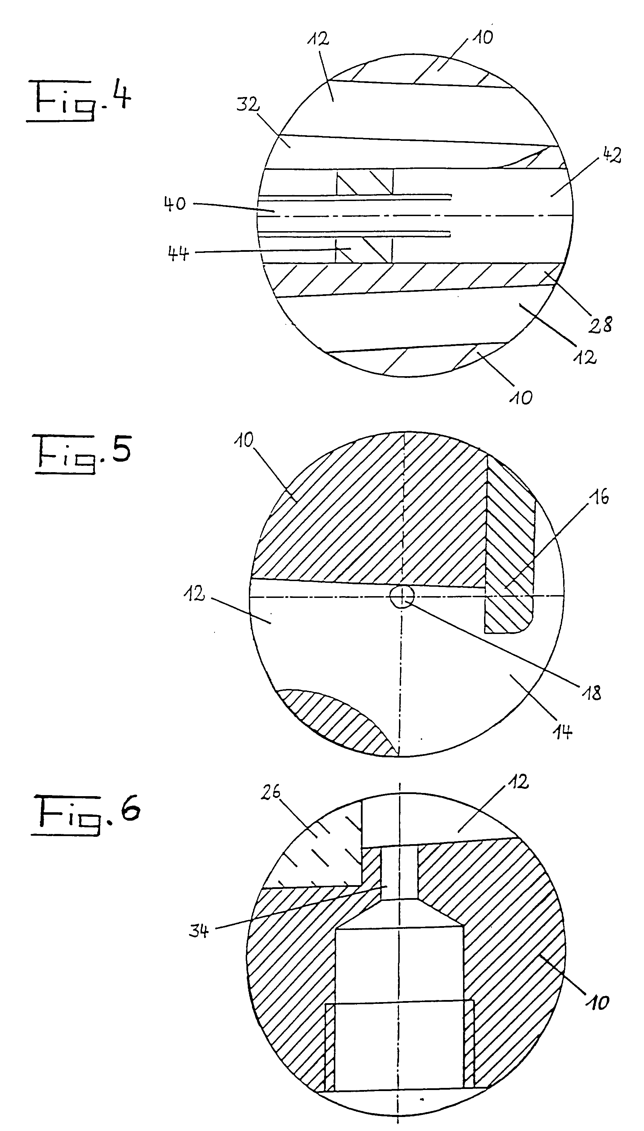

Die in Figur 1 und 2 dargestellte Ausführungsform der Erfindung eignet sich insbesondere zum Abscheiden von Flüssigkeiten aus einem Gasstrom. Die dargestellte Vorrichtung umfaßt ein Gehäuse 10, in dem ein sich konisch erweiternder rotationssymmetrischer Hohlraum 12 gebildet ist. Dieser Hohlraum 12 weist in der Figur rechts einen Gaseintrittsanschluß 14 auf. Im vorliegenden Ausführungsbeispiel wird dieser Gaseintrittsanschluß 14 durch eine in den offenen Querschnitt des Hohlraums hervortretende Blende 16 rundum eingeengt, sodaß eine zu dem Hohlraum 12 konzentrische Öffnung von geringerem Durchmesser als der geringste Durchmesser des Hohlraums 12 gebildet wird. Innerhalb des Hohlraums 12 in der Nähe der Gaseintrittsöffnung 14 mündet tangential zu der inneren Mantelfläche des Gehäuses 10 eine Hilfsgaseintrittsöffnung 18. Die genaue Ausgestaltung dieser Hilfsgaseintrittsöffnung 18 ist in der Detaildarstellung der Figur 2 noch besser erkennbar. Hier wird insbesondere erkennbar, daß die Hilfsgaseintrittsöffnung 18 eine Düse 20 bildet, die mit der Hilfsgaszuführung 22 verbunden ist.

Wie wiederum aus Figur 1 erkennbar, verläuft die Hilfsgaseintrittsöffnung 18 nicht genau senkrecht zu der Mittelachse 24 des Hohlraums, sondern sie weist einen Winkel α zwischen der Mittelachse der Hilfsgaseintrittsöffnung und der Mittelachse 24 des Hohlraums 12 auf, der etwas größer als 90 Grad ist, so daß die Öffnung leicht in Richtung des Gasaustritts zeigt.

Der Hohlraum 12 verbreitert sich kontinuierlich bis zu seinem gasaustrittsseitigen Ende. An diesem Ende ist mittels einer elektrisch isolierenden ringförmigen Dichtung 26 ein Füllkörper 28 eingesetzt. Dieser Füllkörper 28 weist die gleiche Konizität wie die Mantelfläche des Hohlraums 12 auf. Diese Konizität wird durch den Winkel β zwischen der Mittelachse 24 des Hohlraums 12 und der Mantelfläche des Hohlraums 12 bzw. der Außenfläche des Füllkörpers 28 angegeben. Vorzugsweise beträgt dieser Winkel β etwa 2,5 Grad. Der Füllkörper 28 füllt somit den Hohlraum 12 dergestalt aus, daß ein hohler Bereich mit einer in etwa konstanten Wandstärke d von vorzugsweise 4 mm entsteht. An seinem gaseintrittsseitigen Ende kann der Füllkörper 28 abgerundet ausgebildet sein. Vorzugsweise liegt dieses gaseintrittsseitige Ende des Füllkörpers 28 etwa auf der Höhe des Hilfsgaseintrittsanschlusses 18 oder etwas gasaustrittsseitig davon. Der Füllkörper 28 ist wiederum innen bis zu etwa 2/3 seiner Länge ausgehöhlt. Diese Aushöhlung steht über einen oder mehrere längliche Schlitze 32 mit dem Hohlraum 12 in Verbindung. Diese Schlitze 32 verlaufen vorzugsweise parallel zu der Mittelachse 24 des Hohlraums 12.

Am gasaustrittsseitigen Ende des Hohlraums 12, kurz vor der Dichtung 26 befindet sich eine Flüssigkeitsaustrittsöffnung 34 in dem Gehäuse 10, die die Mantelfläche des Hohlraums 12 mit einer Flüssigkeitsableitung verbindet.

Wenn nur ein Schlitz 32 zum Gasaustritt in dem Füllkörper 28 vorgesehen ist, wird die Flüssigkeitsaustrittsöffnung 34 vorzugsweise diesem gegenüberliegend angeordnet. In einem solchen Fall empfiehlt es sich auch, wenn die Vorrichtung in einer definierten Lage betrieben wird, diese Lage so zu wählen, daß die Austrittsöffnung 34 nach unten zeigt, während der Schlitz 32 an der Oberseite des Füllkörpers angeordnet ist.

Zur weiteren Verbesserung der Abscheidung von Flüssigkeitströpfchen oder Feststoffen aus dem Gasstrom ist ein Hochspannungs-Gleichspannungsanschluß 36 vorgesehen, der den Füllkörper 28 gegenüber dem Gehäuse 10 elektrostatisch auflädt.

Das in den Figuren 1 und 2 dargestellte Ausführungsbeispiel funktioniert folgendermaßen: Der zu reinigende Gasstrom tritt entlang des mit A gekennzeichneten Pfeils durch den Gaseintrittsanschluß 14 in den Hohlraum 12 ein. Durch die Hilfsgaszuführung 22 wird ein unter Überdruck stehendes Gas, im einfachsten Falle Druckluft, wie mit Pfeil B dargestellt zugeführt. Durch die Düsenwirkung der Hilfsgaseintrittsöffnung 18 oder durch eine zusätzliche Düse 20 wird das unter Druck stehende Hilfsgas erheblich beschleunigt, sodaß es sich mit sehr hoher Geschwindigkeit entlang der Mantelfläche des Hohlraums 12 in schraubenförmigen Bahnen, die in Figur 1 durch die Pfeile C angedeutet sind, bewegt. Durch die tangentiale Einströmung des Hilfsgases wird an der Mantelfläche des Hohlraums 12 eine Gasschicht erzeugt, die mit einer hohen Geschwindigkeit rotiert. Diese Gasschicht nimmt das entlang Pfeil A einströmende zu reinigende Gasgemisch mit und bringt es ebenfalls zum Rotieren. Dabei entsteht entlang der Mittelachse des Hohlraums 12 ein Unterdruck, bedingt durch die Rotation des Gases und die Fliehkraft. Die in die Gaseintrittsöffnung 14 vorstehende Blende 16 verhindert, daß das rotierende Gasgemisch von der Mantelfläche des Hohlraums 12 aus in Richtung der Gaseintrittsöffnung ausströmen kann.

Durch die Konizität der Mantelfläche des Hohlraums 12 und durch die um den Winkel α von vorzugsweise 91 Grad schräg angeordnete Hilfsgaseintrittsöffnung wird der Gasstrom schraubenförmig vom Gaseintrittsanschluß 14 der Vorrichtung in Richtung auf den Gasaustrittsanschluß 38 hin bewegt. Dabei scheiden sich Schwebekörper (Feststoffpartikelchen und/oder Flüssigkeitströpfchen) an der Mantelfläche des Hohlraums 12 und werden dann durch den weiterströmenden Gasstrom bis zur Dichtung 26 getrieben, wo sie sich sammeln und, bei geeigneten Betriebsbedingungen unter Druck, durch die Austrittsöffnung 34 austreten.

Für den Fall, daß mit der Vorrichtung gem. Figur 1 beispielsweise Dieselmotorenabgase gereinigt werden sollen, findet als Hilfsgas vorzugsweise Druckluft (beispielsweise aus dem bei größeren Dieselfahrzeugen üblicherweise vorhandenen Druckluftsystem) Verwendung. Da die dann entlang der Mantelfläche des Hohlraums 12 abgeschiedenen Feststoffpartikel nicht fluide sind, werden diese nur sehr schwer in Richtung der Dichtung 26 getrieben. Vielmehr setzen sich diese Feststoffpartikel an der Mantelfläche an. Da diese Partikel aber gut brennbar sind, kann man an der Mantelfläche 12 elektrische Heizwicklungen anordnen, die vorzugsweise ebenfalls schraubenförmig wie der Weg des Gasgemischs verlaufen. Je nach Anfall von Rußpartikeln, können diese Heizwiderstände dann durch einen kurzen Stromstoß zum Aufglühen gebracht werden, wodurch die Verbrennung der Rußpartikel initiiert wird. Es genügt dabei ein sehr kurzer Stromstoß, da die Verbrennung der Rußpartikel dann exotherm erfolgt und keine weitere Energie benötigt wird. Die Rußpartikel verbrennen zu unschädlichem CO₂.

Wenn Flüssigkeiten, wie beispielsweise Öle abgeschieden werden, so folgen diese den mit D bezeichneten Pfeilen und können an der Austrittsöffnung 34 abgeleitet werden. Bei der reinen Abscheidung von Feststoffen, beispielsweise Dieselruß und deren sukzessiver Verbrennung kann natürlich auf die Austrittsöffnung 34 verzichtet werden.

Das gereinigte Gas, welches spezifisch leichter ist, sammelt sich an der Oberfläche des Füllkörpers 28. Von dort kann es durch den oder die Schlitze 32 wie durch die mit E gekennzeichneten Pfeile dargestellt zum Gasaustrittsanschluß 38 strömen. Bei der Abscheidung von Flüssigkeiten aus einem Gasstrom erweist es sich als weiterer Vorteil, daß das Hilfsgas durch die Düse 20 und/oder die Hilfsgasaustrittsöffnung 18 expandiert wird. Dadurch kühlt es ab und vermag dadurch zusätzliche Flüssigkeit, die noch nicht kondensiert in dem Gasstrom enthalten ist, kondensieren lassen, sodaß zusätzliche Flüssigkeit abgeschieden wird.

Um diese Wirkung zu verbessern, kann das Hilfsgas unter sehr hohem Druck oder bereits vorgekühlt zugeführt werden. Zur Reinigung von Gasströmen auf chemischem Wege kann als Hilfsgas beispielsweise ein spezielles Gas benutzt werden, das ein Ausfällen der Substanzen, die sich im zu reinigenden Gasoder Dampfstrom befinden, bewirkt. Beispielsweise kann so Chlorwasserstoffgas aus einem Gasstrom ausgeschieden werden, indem man als Hilfsgas Ammoniak verwendet. Es bilden sich dann NH₄Cl-Partikelchen, die sich an der Gehäusewand niederschlagen, und die beispielsweise durch Zuführungen von Wasser oder Wasserdampf gelöst und in Lösung abtransportiert werden können.

Wie schon beschrieben, erfolgt die Abführung des gereinigten Gasstromes durch den oder die Schlitze 32 in dem Füllteil 28, die sich vom gasaustrittsseitigen Ende des Hohlraums 12 bis etwa in dessen Mitte erstrecken. Es ist dabei wichtig, daß sich das Füllteil 28 bis nahe an die Hilfsgaseintrittsöffnung 18 erstreckt, da durch das Füllteil 28 verhindert wird, daß sich gereinigte Teile des Gasstroms, die bereits an Geschwindigkeit verloren haben, wieder im Kern des Filters von der Austrittsseite zur Eintrittsseite zurückbewegen können. Diese Gefahr besteht aus dem Grund, daß sich ohne Füllkörper 28 in der Nähe der Rotationsachse 24 in dem Hohlraum 12 ein Unterdruck aufbauen würde.

Die beschriebene Vorrichtung kann auch zur Trennung von Gasgemischen mit unterschiedlichem spezifischem Gewicht genutzt werden. Die schwerere Gasfraktion sammelt sich dabei an der Mantelfläche des Hohlraums 12 und kann durch die Austrittsöffnung 34 abgeführt werden. Durch den Gasaustrittsanschluß 38 strömt dann im wesentlichen nur die leichtere Fraktion. Auf diese Weise kann die erfindungsgemäße Vorrichtung sogar zur Isotopentrennung verwendet werden.

Figur 3 zeigt eine Ausführungsform der Erfindung, die sich besonders gut zur Trennung von Gasgemischen mit unterschiedlichem spezifischem Gewicht eignet.

Diese Vorrichtung weist erhebliche Ähnlichkeiten mit der zuvor in Figur 1 beschriebenen Vorrichtung auf. Auch hier ist ein Gehäuse 10 vorgesehen, welches einen rotationssymetrischen sich vom Gaseintrittsanschluß 14 zum Gasaustrittsanschluß 38 stufenlos konisch erweiterenden Hohlraum 12 umschließt. Der Gaseintrittsanschluß 14 ist hier ebenfalls durch eine Blende 16 verengt. In der Nähe des Gaseintrittsanschlusses 14 ist wiederum eine Hilfsgaseintrittsöffnung 18 vorgesehen, die wiederum tangential zur Mantelfläche des Hohlraums 12 mündet, und um einen Winel von einer oder mehreren Winkelgrad gegenüber der Senkrechten auf den Gasaustrittsanschluß 38 hin geneigt ist.

Ebenso ist wiederum ein in den Hohlraum 12 mittels einer Dichtung 26 eingesetzter Füllkörper 28 vorgesehen, der im wesentlichen die gleiche Konizität wie der Hohlraum 12 und einen stets um einige Millimeter geringeren Durchmesser aufweist. Auch hier erstreckt sich der Füllkörper 28 bis auf die Höhe der Hilfsgaseintrittsöffnung 18. Auch hier ist der Füllkörper 28 hohl ausgebildet und weist einen Gasaustrittsschlitz 32 auf, der länglich parallel zur Rotationsachse 24 des Hohlraums 12 etwa von der Mitte des Hohlraums 12 bis zu dessen gasaustrittsseitigem Ende verläuft. Auch hier ist eine Austrittsöffnung 34 in der Nähe des gasaustrittsseitigen Endes des Hohlraums 12 vorgesehen.

Zusätzlich erstreckt sich hier durch den Gasaustrittsanschluß 38 ein dünnes Rohr 40 in den hohlen Innenraum 42 des Füllkörpers 28. Das Rohr endet erst kurz vor dem gaseintrittsseitigen Ende des Hohlraums 42 in dem Füllkörper 28. Vorzugsweise erstreckt sich der Hohlraum 42 in dem Füllkörper 28 auch in Richtung auf den Gaseintrittsanschluß 14 weiter als der Schlitz 32. Das Rohr 40 endet vorzugsweise etwa auf der Höhe des gaseintrittsseitigen Endes des Schlitzes 32 und ist ein kurzes Stück gasaustrittsseitig von seinem Ende mittels einer ringförmigen Dichtung 44 dicht befestigt, sodaß die Dichtung 44 den Hohlraum 42 in dem Füllkörper 28 vollständig abdichtet.

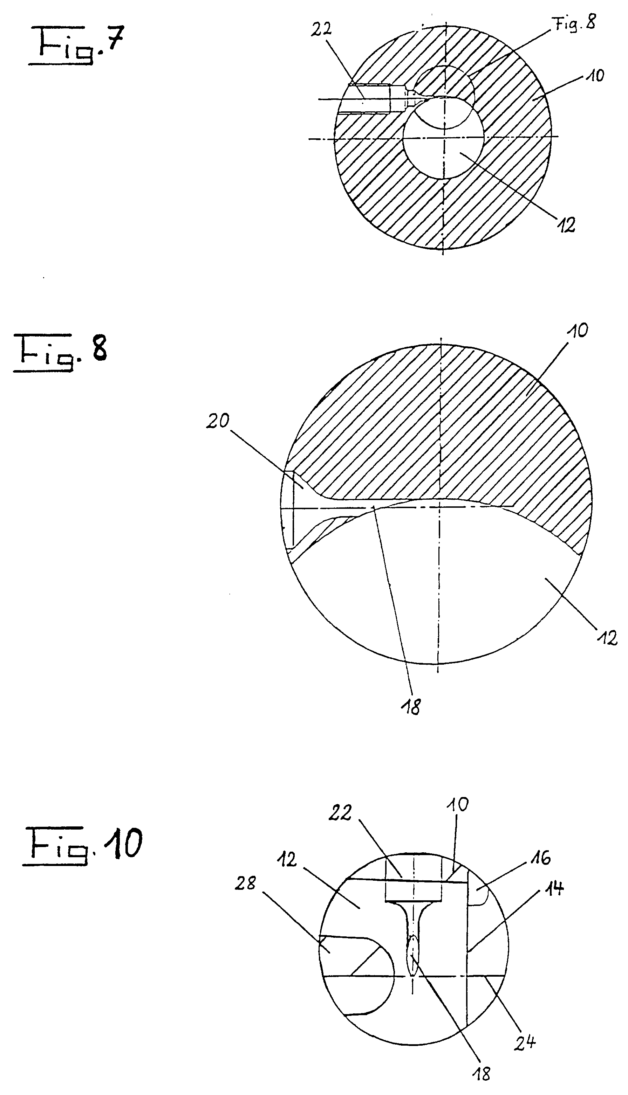

Die Figuren 4, 5 und 6 zeigen jeweils vergrößerte Details der für die Erfindung besonders interessanten Teile (Figur 5 die Hilfsgaseintrittsöffnung 18, Figur 4 die Anordnung des Rohres 40 und Figur 6 die Anordnung der Austrittsöffnung 34).

Die Figuren 7 und 8 zeigen die Hilfsgaseintrittsöffnung 18 in Schnittdarstellung, wobei der Schnitt senkrecht zur Mittelachse 24 des Hohlraums 12 erfolgt. Aus Figur 8 ergibt sich besonders deutlich die tangentiale Zuführung des Hilfsgases.

Diese in den Figuren 3 bis 8 dargesetellte Vorrichtung eignet sich besonders gut zum Trennen von Gasgemischen aus Gasen mit unterschiedlichem spezifischem Gewicht. Ihre Funktion ähnelt der weiter oben beschriebenen Funktion der Vorrichtung gem. Figur 1. Es wird dabei lediglich als Hilfsgas ebenfalls das zu trennende Gasgemisch verwendet. Durch die Austrittsöffnung 34 kann ein hinsichtlich der schwereren Fraktion erheblich angereichertes Gasgemisch entnommen werden, während durch das Rohr 40 ein hinsichtlich der leichten Fraktion angereichertes Gasgemisch entnommen werden kann. Die Bewegung des Gases entspricht im wesentlichen ebenfalls den Pfeilen in Figur 1. Im gasaustrittsseitigen Ende des Hohlraums 12 sammelt sich hier lediglich die schwerere Fraktion des Gasgemisches.

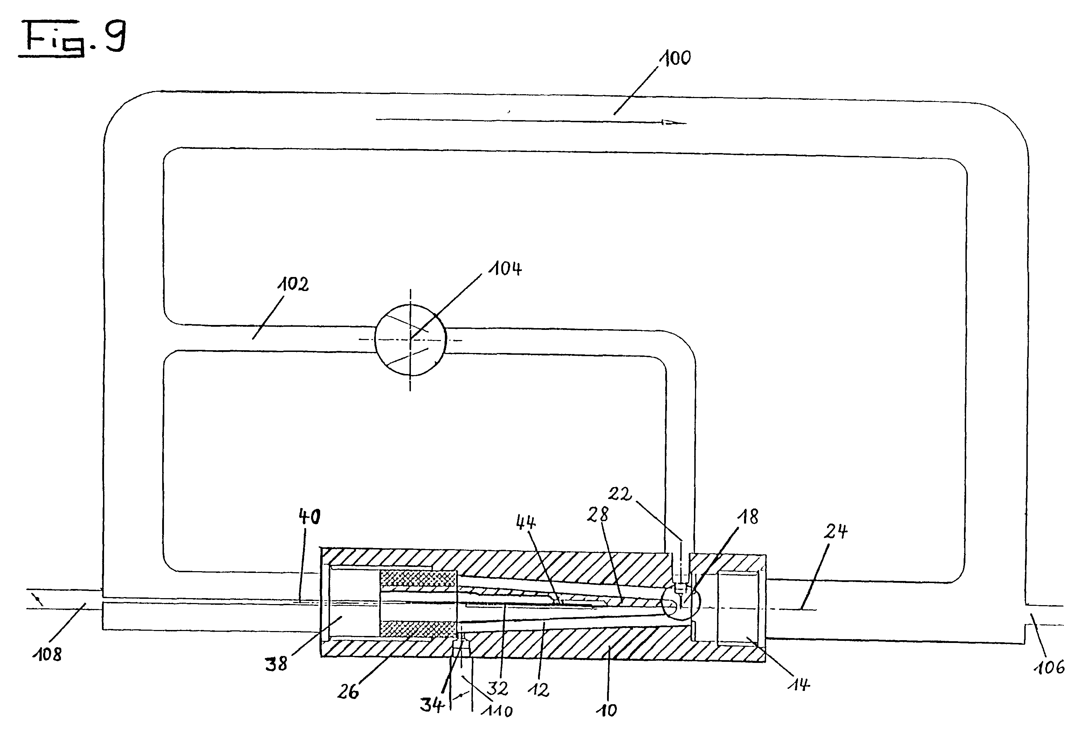

Figur 9 zeigt die Verwendung der vorliegenden Erfindung zur Auftrennung eines Gasgemisches in Fraktionen mit verschiedenem spezifischem Gewicht. Dabei ist der Gasaustrittsanschluß 38 der erfindungsgemäßen Vorrichtung über eine Zirkulationsleitung 100 mit dem Gaseintrittsanschluß 14 verbunden, sodaß die Hauptmenge des Gasgemisches zirkulieren kann. Von dieser Zirkulationsleitung 100 zweigt eine Hilfsgasleitung 102 ab. Diese führt über einen Kompressor 104 das erforderliche Hilfsgas unter Druck zur Hilfsgaseintrittsöffnung 18. Durch eine Zuleitung 106 wird neues zu trennendes Gasgemisch in der Nähe des Gaseintrittsanschlusses 14 zugeführt. Durch das Rohr 40 wird ein stark hinsichtlich der leichten Fraktion angereichertes Gasgemisch der Ableitung 108 für die leichte Fraktion zugeführt. Das hinsichtlich der schweren Fraktion stark angereicherte Gemisch wird durch die Austrittsöffnung 34 einer entsprechenden Ableitung 110 zugeführt. Auf diese Weise ist eine sehr gute Abtrennung der verschiedenen Gasfraktionen möglich, da das Gasgemisch die Vorrichtung hier so lange durchläuft, bis eine genügende Anreicherung erzielt ist, und die entsprechend angereicherten Bestandteile dann durch die Leitungen 108 und 110 entnommen werden können.

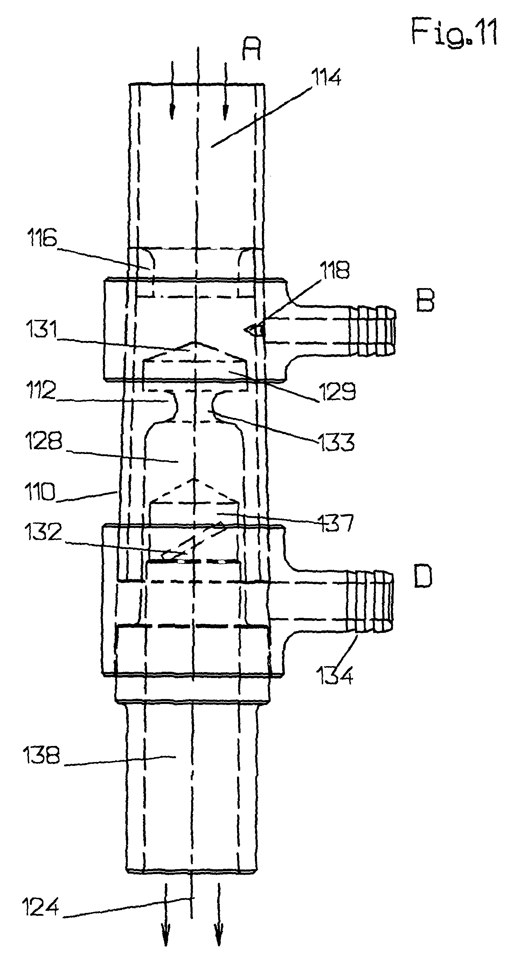

Figur 10 zeigt die Detaildarstellung der Figur 9 mit dem Blick seitlich auf die Hilfsgaseintrittsöffnung 18.

Die Vorrichtung gem. Fig. 9 und 10 kann im Überdruck als auch im Unterdruck arbeiten. Bei Unterdruck im Gasgemischkreislauf besteht der Vorteil einer höheren Austrittsgeschwindigkeit an der Hilfsgasaustrittsöffnung, wodurch eine erhöhte Rotationsgeschwindigkeit und entsprechend höhere Fliehkraft erzeugt wird.

Die Entnahme der leichten Fraktion durch das Rohr 40 kann auch über Schlitze in diesem Rohr 40 erfolgen, wobei diese Schlitze auch zur oder von der Drehrichtung geneigt sein können.

Die Entnahme der schweren Fraktion kann anstelle einer Austrittsöffnung 34 beispielsweise auch über axiale Schlitze, radiale Spalten oder Bohrungen erfolgen. Beispielsweise können hier auch sogenannte Abschälschlitze Verwendung finden.

Bei geeigneten Gasgemischen kann hier auch eine Art Fraktionierung erfolgen, in dem an mehreren Stellen Fraktionen jeweils unterschiedlichen spezifischen Gewichts entnommen werden.

Bei derartigen Vorrichtungen können an den entsprechenden Stellen Ventile vorgesehen sein, sodaß die Anlage vorevakuiert werden kann, wenn eine besondere Reinheit des Gasgemisches erforderlich ist, oder wenn Gasgemische verarbeitet werden sollen, die mit den Bestandteilen der Luft oder Feuchtigkeit unverträglich sind.

Es besteht auch die Möglichkeit, den Füllkörper vollständig durch ein Entnahmerohr im Mittelachsenbereich des Hohlraums zu ersetzen.

Die Figuren 11 bis 13 zeigen eine besonders bevorzugte Ausführungsform der vorliegenden Erfindung. Figur 11 zeigt diese Ausführungsform von der Seite, wobei die Innenkonturen und die Konturen des Füllkörpers gestrichelt dargestellt sind.

Auch diese Vorrichtung umfaßt ein Gehäuse 110, in dem ein sich konisch erweiterender rotationssymmetrischer Hohlraum 112 gebildet ist. Dieser Hohlraum 112 weist in der Figur 11 rechts einen Gaseintrittsanschluß 114 auf. Auch hier wird der Gaseintrittsanschluß 114 durch eine in den offenen Querschnitt des Hohlraums hervortretende koaxiale Blende 116 rundum eingeengt, so daß eine zu dem Hohlraum 112 konzentrische Öffnung von geringerem Durchmesser als der geringste Durchmesser des Hohlraums 112 gebildet wird. Innerhalb des Hohlraums 112 mündet in der Nähe der Blende 116 tangential zu der inneren Mantelfläche des Gehäuses 110 eine Hilfsgaseintrittsöffnung 118 . Diese Hilfsgaseintrittsöffnung 118 kann gleich gestaltet sein, wie die Hilfsgaseintrittsöffnung 18 in Figur 2.

Im vorliegend dargestellten Ausführungsbeispiel verläuft die Hilfsgaseintrittsöffnung 118 genau senkrecht zu der Mittelachse 124 des Hohlraums 112. Die Hilfsgaseintrittsöffnung 118 kann hier jedoch ebenfalls wie die Hilfsgaseintrittsöffnung 18 in Figur 1 mit einem Winkel α zwischen der Mittelachse der Hilfsgaseintrittsöffnung und der Mittelachse des Hohlraums angeordnet sein, der etwas größer ist als 90°.

Der Hohlraum 112 verbreitert sich kontinuierlich mit einer Steigung von 6 : 100, dies entspricht einem Winkel von 1,72° zu der Mittelachse 124 bis zu seinem gasaustrittsseitigen Ende. Dort ist ein Füllkörper 128 eingesetzt. An seinem gaseintrittsseitigen Ende ist der Füllkörper 128 bei dieser Ausführungsform der Erfindung mit einem Kopf 129 versehen. Dieser Kopf 129 weist die Form einer zylindrischen Scheibe auf, und läuft gaseintrittsseitig in eine flache, als Kegel ausgeführte Spitze 131 aus. Der Durchmesser dieses Kopfes ist größer als der größte Durchmesser des Füllkörpers 128 in seinem hinteren, konischen Bereich. Die Mantelfläche des Kopfes 129 ist ebenfalls leicht konisch mit einer Konizität von 6 : 100 ausgebildet. Stromabwärts von dem Kopf weist der Füllkörper eine Einschnürung 133 auf, in der der Durchmesser des Füllkörpers auf weniger als ein Drittel des Durchmessers des Kopfes reduziert ist. Nach dieser Einschnürung 133 setzt sich der Füllkörper 128 wiederum mit der Konizität 6 : 100 fort, der Durchmesser des Füllkörpers bleibt in diesem Abschnitt jedoch stets geringer als der Durchmesser des Kopfes 129, jedoch erheblich größer als der Durchmesser in dem eingeschnürten Bereich 133.

Etwa in der Mitte des hinteren konischen Bereichs des Füllkörpers 128 sind neun schrägverlaufende Schlitze 132 parallel nebeneinander angeordnet. In den Figuren ist aus Vereinfachungsgründen jeweils nur ein Schlitz dargestellt. Diese Schlitze stellen die Verbindung zwischen dem Hohlraum 112 und einer in dem Füllkörper 128 konzentrisch angeordneten Bohrung 137 her. Diese Bohrung 137 führt zu dem Gasaustrittsanschluß 138.

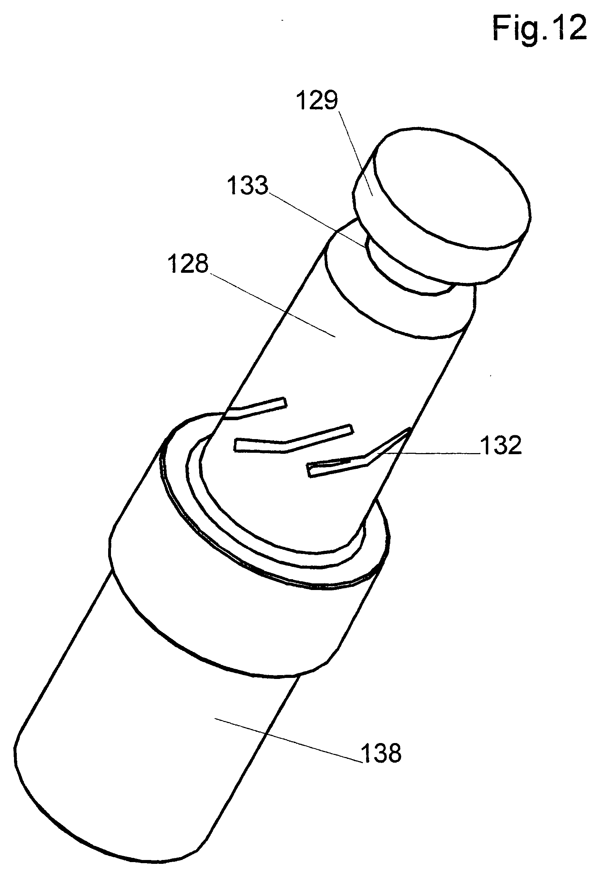

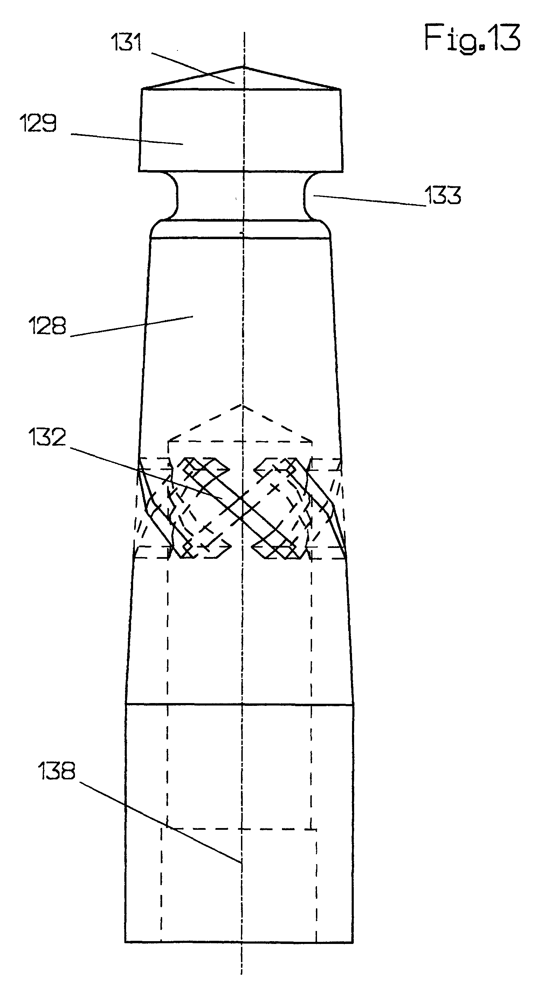

Zur Verdeutlichung ist in Figur 12 der Füllkörper 128, der bereits mit dem Gasaustrittsanschluß 138 verbunden ist, nochmals perspektivisch räumlich dargestellt, während Figur 13 eine Darstellung des Füllkörpers 128 von der Seite zeigt, wobei ebenfalls bereits der Gasaustrittsanschluß 138 mit dargestellt ist. Die Innenkonturen der Bohrung 137 sind dabei gestrichelt dargestellt.

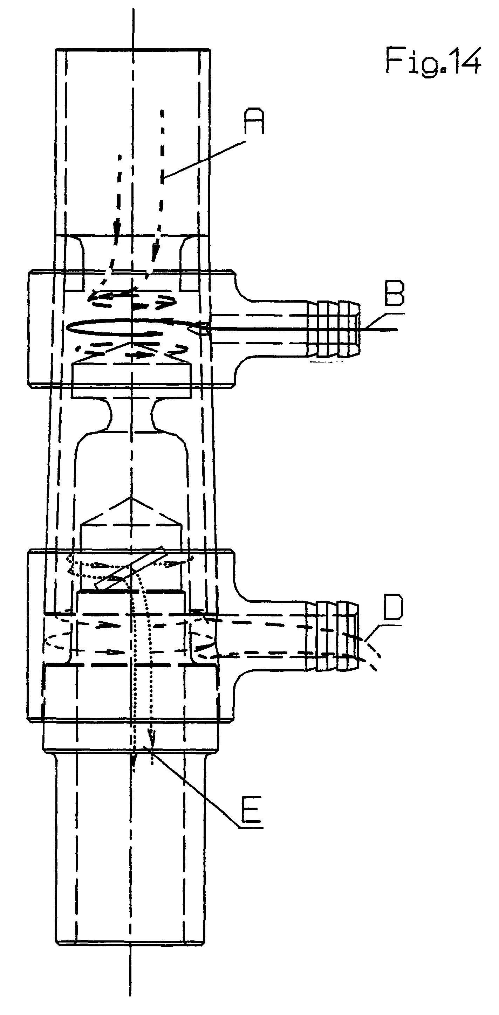

Die Funktion des erfindungsgemäßen aerodynamischen Filters ergibt sich aus Figur 14. Dort ist die Bewegung der Luft mit Pfeilen ausführlich dargestellt. Hierbei tritt das zu reinigende Gas durch den Gaseintrittsanschluß 114, wie mit den gestrichelten Pfeilen A dargestellt, in die erfindungsgemäße Vorrichtung ein und passiert die Blende 116. Dort wird dieses noch ungereinigte Gas durch das durch die als Düse wirkende Öffnung 118 einströmende Hilfsgas, welches durch die durchgezogenen Pfeile B dargestellt ist, in Rotation versetzt. Rotierend strömt das Gemisch der beiden Gase nun an dem Kopf 129 des Füllkörpers 128 vorbei, wobei sich in dem Gasgemisch enthaltende Aerosole an der Innenwand des Gehäuses 110 absetzen und zu der Austrittsöffnung 134 gefördert werden. Das gereinigte Gas strömt durch die Schlitze 132 in den Gasaustrittsanschluß 138 wie mit den gepunkteten Pfeilen E dargestellt.

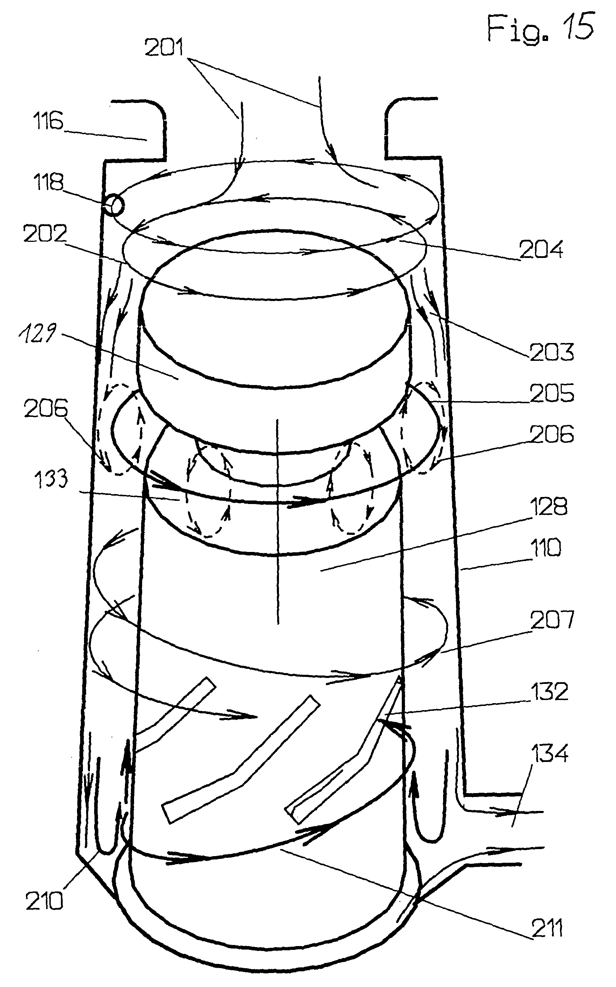

Figur 15 zeigt detailliert den Strömungsverlauf um den Füllkörper 128 in Fig. 14. Dabei strömt das zu reinigende oder zu trennende Gasgemisch wie in den Pfeilen 201 dargestellt an der Blende 116 vorbei. In dem Bereich hinter der Blende 116 trifft dieses einströmende Gasgemisch auf das aus der Hilfsgasaustrittsöffnung 118 austretende Hilfsgas, welches wie mit den Pfeilen 204 dargestellt, an der Innenwand des Hohlraums 112 umläuft. Wie mit den Pfeilen 202 dargestellt, wird das eintretende Gasgemisch von dem rotierenden Hilfsgas mitgenommen, und beginnt ebenfalls zu rotieren. Wie mit den Pfeilen 203 dargestellt, strömt das Gasgemisch dann an dem Kopf 129 vorbei. Die Strömungsaustrittsgeschwindigkeit aus der Hilfsgaseintrittsöffnung 118 kann dabei erheblich größer sein als bei herkömmlichen Düsen, da das Gas nicht gegen eine ruhende Gasmasse strömen muß, sondern in die bereits rotierende Gasmasse einströmt.

Nachdem sich das Gasgemisch also an dem Kopf 129 vorbeibewegt hat, erreicht es die Einschnürung 133 in dem Füllkörper 128. Dadurch löst sich die Gasströmung von der Innenwand des Hohlraums 112 ab. Es bilden sich dabei weitere Wirbel 206, die mit den Pfeilen 205 umlaufen. Somit entsteht hier eine im wesentlichen torusförmige Strömung. Dadurch erfolgt hier eine weiter verbesserte Abscheidung der Partikel, die in dieser torusförmigen Strömung nach außen geschleudert werden, bis sie entlang der Innenwand des Gehäuses 110 mit der schraubenförmigen Strömung 207 zum unteren Ende 210 des Hohlraums 112 gelangen. Das gereinigte Gas strömt dann entlang der Pfeile 211 am Füllkörper 128 entlang und entweicht durch die Ausströmschlitze 132.

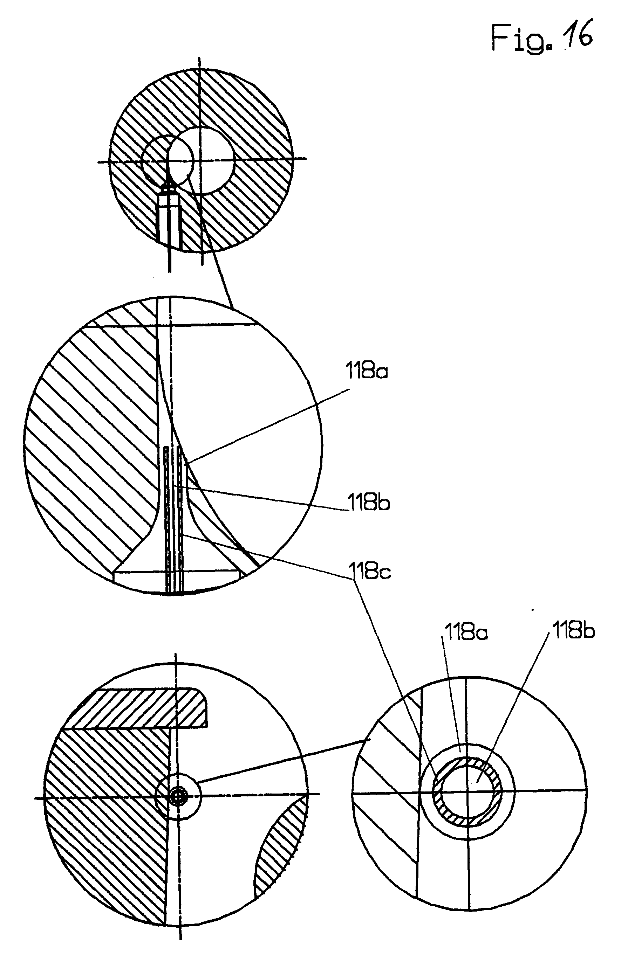

Erfindungsgemäß kann dem einströmenden Hilfsgas auch ein weiterer Stoff, beispielsweise in Dampfform oder in flüssiger Form zugemischt werden. Dazu kann eine Vorrichtung Verwendung finden, wie sie in Fig. 16 dargestellt ist. Hierbei ist mit 118a die normale Hilfsgaseinströmöffnung dargestellt. In diese ist hier zusätzlich ein koaxiales Rohr 118c eingesetzt, durch dessen Innenraum 118b zusätzlich beispielsweise ein Dampf- oder Wasserstrahl dem Hilfsgas zugesetzt werden kann. Dadurch kann beispielsweise eine Auswaschung von wasserlöslichen, gasförmigen oder festen Bestandteilen des einströmenden Gasgemischs erreicht werden. Bei dieser Betriebsart bildet sich auf der Innenwand des Gehäuses 110 ein dünner Flüssigkeitsfilm, der langsam nach unten wandert, und am unteren Ende des Hohlraums 112 entnommen werden kann.

Diese gemischte Antriebsweise mit Gas und Flüssigkeit oder Dampf ermöglicht es beispielsweise, auch Substanzen auszufiltern, wie sie beispielsweise aus Cyansalzbädern austreten. Sie werden an die Flüssigkeit gebunden und können aus dieser wieder zurückgewonnen werden. Auch beim Reinigen von Rauchgasen ist diese gemischte Antriebsweise von Vorteil, denn in der Flüssigkeit, beispielsweise Wasser, werden nicht nur die Feststoffe gebunden, sondern auch Gase wie zum Beispiel SO₂ und NOx.

Diese Vorrichtung kann dann auch zu Kühlzwecken verwendet werden. Es werden dabei Wasser und Luft als Antriebsmedien verwendet, das Wasser wird beim Verlassen des Rohres 118c vernebelt. Beim Eintritt in den Filter werden diese Nebeltröpfchen durch Aufprall auf ein Mehrfaches vergrößert und die darüber hinwegstreichende Antriebsluft erzeugt eine erhebliche Vergrößerung der Verdampfungsgeschwindigkeit. Das wiederum führt zu einem Energieentzug, also zu einem Abkühlen der Luftmassen. Durch die Abscheidewirkung des Filters ist die austretende Luft frei von Nebeltröpfchen aber völlig mit Feuchtigkeit gesättigt. Gleichzeitig ist die Temperatur der ausströmenden Luft erheblich niedriger. Diese Verwendungsweise der Vorrichtung eignet sich besonders gut für Kühlräume, deren Temperatur nicht unter 0 °C liegen soll, und die gleichzeitig eine hohe Luftfeuchtigkeit benötigen, beispielsweise Lagerräume für frisches Obst oder Gemüse.

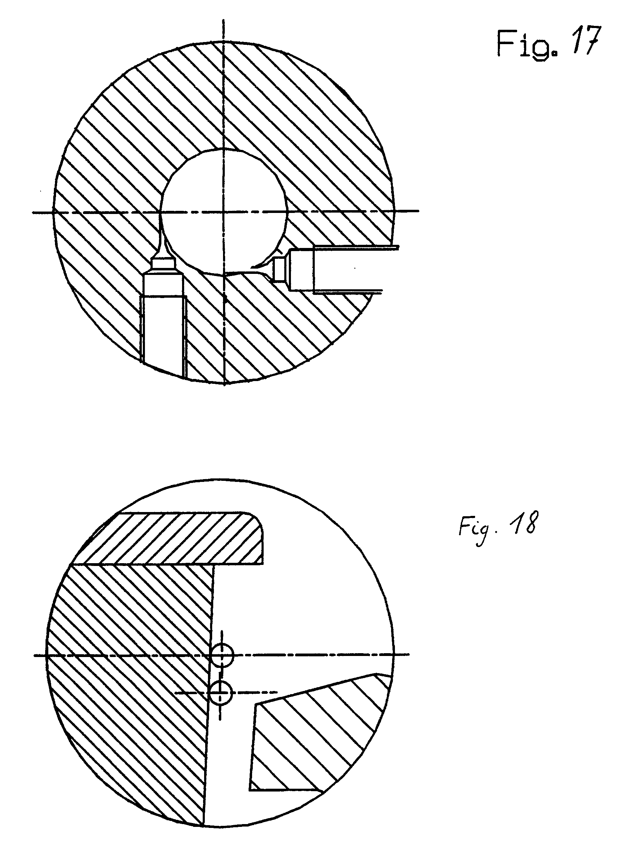

Figur 17 zeigt eine weitere Möglichkeit der Hilfsgaszuführung. Hierbei sind zwei Hilfsgaseintrittsöffnungen vorgesehen, die gegeneinander um 90° versetzt sind. Diese Hilfsgaseintrittsöffnungen können entweder das gleiche Hilfsgas führen oder wiederum Gas und ein anderes Medium, beispielsweise Wasser.

Wie in Figur 18 dargestellt, können die beiden Hilfsgaszuführungen auch an der gleichen Position, aber untereinander angeordnet sein. Gegebenenfalls können auch weitere Hilfsgasund Hilfsmedienzuführungen vorgesehen werden, beispielsweise zwei Zuführungen für Luft und eine für Wasser o.ä.

Der besondere Vorteil dieser Erfindung liegt darin, daß die Vorrichtung recht einfach aufgebaut ist, und völlig ohne bewegliche Teile auskommt. Es wird daher auch im Dauerbetrieb kaum Wartungsaufwand nötig sein.

## Patentansprüche

1. Vorrichtung zum Abscheiden von Flüssigkeiten und/oder Feststoffen oder Gasen mit anderem spezifischem Gewicht aus einem Gasstrom mit einem Gaseintritts- und einem Gasaustrittsanschluß, mit einem rohrförmigen Hohlraum (12; 112), in den in der Nähe des Gaseintrittsanschlusses (14; 114) mindestens eine Hilfsgaseintrittsöffnung (18; 118) tangential zur Mantelfläche des Hohlraumes (12; 112) mündet, **dadurch gekennzeichnet, daß** der Hohlraum (12; 112) sich vom Gaseintrittsanschluß (14; 114) zum Gasaustrittsanschluß (38; 138) konisch erweitert.

2. Vorrichtung nach Anspruch 1, **dadurch gekennzeichnet, daß** die Hilfsgaseintrittsöffnung (18; 118) gegenüber der Senkrechten zu der Mittelachse (24; 124) des Hohlraums (12; 112) in Richtung auf den Gasaustrittsanschluß (38; 138) hin geneigt ist, so daß das Hilfsgas in einer schraubenförmigen Bahn entlang der Mantelfläche des Hohlraums (12; 112) auf den Gasaustrittsanschluß (38; 138) hin geführt ist.

3. Vorrichtung nach Anspruch 1 oder 2, **dadurch gekennzeichnet, daß** koaxial in dem Hohlraum (12; 112) ein Füllkörper (28; 128) mit geringerem Durchmesser und ähnlicher Konizität angeordnet ist, so daß der Hohlraum (12; 112) die Form eines hohlen Kegelstumpfes mit etwa konstanter Wanddicke aufweist.

4. Vorrichtung nach Anspruch 3, **dadurch gekennzeichnet, daß** der Füllkörper (28; 128) sich fast bis auf die Höhe des Hilfsgaseintrittsanschlusses (18; 118) erstreckt.

5. Vorrichtung nach Anspruch 3 oder 4, **dadurch gekennzeichnet, daß** der Füllkörper (28) durch ein Dichtungselement (26) in dem Hohlraum (12) befestigt ist, welches den Hohlraum (12) in der Nähe des Gasaustrittsanschlusses (38) dicht abschließt und der Füllkörper (28) hohl und zum Gasaustrittsanschluß (38) hin offen ausgebildet ist, und mindestens eine seitliche Durchtrittsöffnung (32) für das Gas aufweist.

6. Vorrichtung nach Anspruch 5, **dadurch gekennzeichnet, daß** die Durchtrittsöffnung(en) (32) die Form eines parallel oder schräg zu der Mittelachse (24) des Füllkörpers (28) verlaufenden länglichen Schlitzes aufweisen.

7. Vorrichtung nach Anspruch 5 oder 6, **dadurch gekennzeichnet, daß** das Dichtungselement (26) als elektrischer Isolator ausgebildet ist, und eine Gleichspannungsversorgung (36) vorgesehen ist, die den Füllkörper (28) gegenüber der Wand des Hohlraums (12) elektrostatisch auflädt.

8. Vorrichtung nach einem der Ansprüche 5, 6 oder 7, **dadurch gekennzeichnet, daß** direkt vor dem Dichtungselement (26) in der Wand des Hohlraums (12) eine Austrittsöffnung (34) vorgesehen ist.

9. Vorrichtung nach Anspruch 8, **dadurch gekennzeichnet, daß** nur eine Durchtrittsöffnung (32) in dem Füllkörper (28) vorgesehen ist, und die Austrittsöffnung (34) gegenüber der der Durchtrittsöffnung (32) entgegengesetzten Seite des Füllkörpers (28) angeordnet ist.

10. Vorrichtung nach einem der vorhergehenden Ansprüche, **dadurch gekennzeichnet, daß** am Gaseintrittsanschluß (14) eine Blende (16) oder Stufe vorgesehen ist, die den Querschnitt des Hohlraumes (12) verringert.

11. Vorrichtung nach einem der vorhergehenden Ansprüche, **dadurch gekennzeichnet, daß** die Hilfsgaseintrittsöffnung (18) mit einer Düse (20) versehen ist.

12. Vorrichtung nach einem der vorhergehenden Ansprüche, **dadurch gekennzeichnet, daß** Gaseintritts- und Gasaustrittsanschluß (14, 38) jeweils zentral in je einer Deckfläche des kegelstumpfförmigen Hohlraums (12) angeordnet sind.

13. Vorrichtung nach Anspruch 2 oder einem der diesem folgenden Ansprüche, **dadurch gekennzeichnet, daß** die Mittelachse der Hilfsgaseintrittsöffnung (18) mit der auf die Gasaustrittsöffnung (38) zeigenden Mitttelachse (24) des Hohlraums (12) einen Winkel α von 90,5 Grad bis 100 Grad, vorzugsweise 90,5 Grad bis 92 Grad einschließt.

14. Vorrichtung nach einem der vorhergehenden Ansprüche, **dadurch gekennzeichnet, daß** der Winkel β der Steigung der konisch ausgebildeten Teile (Hohlraum (12) und eventuell Füllkörper (28)) 0,5 Grad bis 15 Grad, vorzugsweise 1 Grad bis 5 Grad beträgt.

15. Vorrichtung nach einem der vorhergehenden Ansprüche, **dadurch gekennzeichnet, daß** an der Mantelfläche des Hohlraums (12) elektrische Heizwiderstände zum Abbrennen von aus dem Gasstrom ausgeschiedenen Feststoffen vorgesehen sind.

16. Vorrichtung nach Anspruch 15, **dadurch gekennzeichnet, daß** die elektrischen Heizwiderstände als in Strömungsrichtung des Hilfsgases verlaufende schraubenförmige Heizwicklungen oder Heizbänder ausgebildet sind.

17. Vorrichtung nach einem der vorhergehenden Ansprüche, **dadurch gekennzeichnet, daß** sich ein Absaugrohr (40) entlang der Mittelachse (24) des Hohlraumes (12) von dem Gasaustrittsanschluß (38) her in den Hohlraum (12) erstreckt.

18. Vorrichtung nach Anspruch 17 und Anspruch 5, **dadurch gekennzeichnet, daß** sich das Absaugrohr (40) im Inneren des Füllkörpers (28) erstreckt und im Inneren des Füllkörpers (28) bis in die Nähe des gaseintrittsseitigen Endes des Füllkörpers (28) reicht.

19. Vorrichtung nach Anspruch 18, **dadurch gekennzeichnet, daß** im gaseintrittsseitigen Drittel der Länge der seitlichen Durchtrittsöffnung(en) (32) eine Abdichtung (44) zwischen Füllkörper (28) und Absaugrohr (40) vorgesehen ist.

20. Vorrichtung nach Anspruch 3 oder 4, **dadurch gekennzeichnet, daß** der Füllkörper (128) an seinem vorderen Ende mit einem Kopf (129) versehen ist, der durch eine Einschnürung (133) von dem übrigen Füllkörper (128) abgesetzt ist.

21. Vorrichtung nach Anspruch 20, **dadurch gekennzeichnet, daß** die Einschnürung (133) einen Durchmesser aufweist, der weniger als 1/3 des Durchmessers des Kopfes (129) beträgt.

22. Vorrichtung nach Anspruch 20 oder 21, **dadurch gekennzeichnet, daß** der Durchmesser des Kopfes (129) größer ist als der Durchmesser des Füllkörpers (128) in seinem konischen Bereich.

23. Vorrichtung nach einem der Ansprüche 20, 21 oder 22, **dadurch gekennzeichnet, daß** der Kopf (129) als flacher Zylinder ausgebildet ist, dessen Mantelfläche die gleiche Konizität aufweist, wie der Füllkörper (128) und der Kopf (129) in einem flachen Kegel nach vorne ausläuft.

## Claims

1. Apparatus for separating fluids and/or solid matter or gases having a different specific weight from a gas flow, said apparatus having a gas inlet connector and a gas outlet connector, and having a tube-like cavity (12; 112), into which at least one auxiliary gas inlet opening (18; 118) is opening in proximity to the gas inlet connector (14; 114) tangentially to the lateral area of said cavity (12; 112), **characterized in that** the cavity (12; 112) conically is enlarged from the gas inlet connector (14; 114) to the gas outlet connector (38; 138).

2. Apparatus according to claim 1, **characterized in that** the auxiliary gas entrance opening (18; 118) is inclined with respect to the normal on the central axis (24; 124) of the cavity (12; 112) in the direction of the gas exit connector (38; 138) such, that the auxiliary gas is guided along the lateral area of the cavity (12; 112) in the direction of the gas exit connector (38; 138) in a helical path.

3. Apparatus according to claim 1 or 2, **characterized in that** coaxially to the cavity (12; 112) there is positioned a filler body (28; 128) having a smaller diameter and a similar conicalness such that the cavity (12; 112) is having the shape of a hollow truncated cone with generally constant wall thickness.

4. Apparatus according to claim 3, **characterized in that** the filler body (28; 128) almost is reaching the height of the auxiliary gas entrance connector (18; 118).

5. Apparatus according to claim 3 or 4, **characterized in that** the filler body (28) is fastened in the cavity (12) by means of a sealing element (26) which sealingly is closing the cavity (12) in proximity of the gas exit connector (38) and, **in that** the filler body (28) is hollow and open in the direction of the gas exit connector (38) and at least is having one lateral opening (32) for the gas.

6. Apparatus according to claim 5, **characterized in that** the opening(s) (32) is (are) having the shape of an elongated slot extending parallel or inclined to the central axis (24) of the filler body (28).

7. Apparatus according to claim 5 or 6, **characterized in that** the sealing element (26) is performed as an electric insulator and, **in that** a source (36) of direct current is provided which electrostaticly is charging the filler body (28) with respect to the wall of the cavity (12).

8. Apparatus according to any of the claims 5, 6 or 7, **characterized in that** immediately upstream the sealing element (26) an exit opening (34) is provided in the wall of the cavity (12).

9. Apparatus according to claim 8, **characterized in that** only one opening (32) is provided in the filler body (28) and, **in that** the exit opening (34) is positioned on the opposite side of the filler body (28) with respect to the opening (32).

10. Apparatus according to any of the preceding claims, **characterized in that** at the gas entrance connector (14) there is provided a baffle (16) or step restricting the cross-section of the cavity (12).

11. Apparatus according to any of the preceding claims, **characterized in that** the auxiliary gas entrance opening (18) is provided with a nozzle (20).

12. Apparatus according to any of the preceding claims, **characterized in that** the gas entrance connector and the gas outlet connector (14, 38), respectively, each are centrally positioned in each one end surface of the cavity (12) shaped like a truncated cone.

13. Apparatus according to claim 2 or any of the following claims, **characterized in that** the central axis of the auxiliary gas entrance opening (18) is positioned in an angle α of 90,5 degrees to 100 degrees, preferably 90,5 degrees to 92 degrees, with respect to the central axis (24) of the cavity (12) directed to the gas exit opening (38).

14. Apparatus according to any of the preceding claims, **characterized in that** the angle β of the incline of the conically shaped part (cavity 12) and possibly filler body (28) is 0,5 degrees to 15 degrees, preferably 1 degree to 5 degrees.

15. Apparatus according to any of the preceding claims, **characterized in that** at the lateral area of the cavity (12) there are provided electric heating resistors for burning off solid matter separated from the gas flow.

16. Apparatus according to claim 15, **characterized in that** the electric heating resistors are performed as helical heater windings or heating bands extending in the direction of the direction of flow of the auxiliary gas.

17. Apparatus according to any of the preceding claims, **characterized in that** a suck-off tube (40) is extending along the central axis (24) of the cavity (12) from the gas exit connector (38) into the cavity (12).

18. Apparatus according to claim 17 and claim 5, **characterized in that** the suck-off tube (40) is positioned in the interior of the filler body (28) and is extending close to the end of the filler body (28) on the side of the gas entrance.

19. Apparatus according to claim 18, **characterized in that** on the third of the length of the lateral opening(s) (32) on the side of the gas entrance there is provided a sealing (44) between the filler body (28) and the suck-off tube (40).

20. Apparatus according to claim 3 or 4, **characterized in that** the filler body (128) is provided with a head (129) at his front end which is separated from the remainder of the filler body (128) by a constriction (133).

21. Apparatus according to claim 20, **characterized in that** the constriction (133) is having a diameter which is less than one third of the diameter of the head (129).

22. Apparatus according to claim 20 or 21, **characterized in that** the diameter of the head (129) is larger than the diameter of the filler body (128) in the conical section thereof.

23. Apparatus according to any of the claims 20, 21, or 22, **characterized in that** the head (29) has the shape of a flat cylinder, the lateral area of which is having the same conicalness as the filler body (128), wherein the head (129) is ending in a flat cone towards the front.

## Revendications

1. Dispositif de séparation de liquides et/ou de matières solides ou de gaz d'un poids spécifique différent contenus dans un courant gazeux, comportant un raccord d'entrée de gaz et un raccord de sortie de gaz, comportant une cavité tubulaire (12 ; 112) dans laquelle débouche, à proximité du raccord d'entrée de gaz (14 ; 114), au moins une ouverture d'entrée de gaz auxiliaire (18; 118), tangentiellement à la surface d'enveloppe de la cavité (12 ; 112), **caractérisé en ce que** la cavité (12 ; 112) s'élargit coniquement depuis le raccord d'entrée de gaz (14 ; 114) vers le raccord de sortie de gaz (38 ; 138).

2. Dispositif selon la revendication 1, **caractérisé en ce que** l'ouverture d'entrée de gaz auxiliaire (18; 118) est inclinée par rapport à la verticale sur l'axe médian (24 ; 124) de la cavité (12 ; 112), en direction du raccord de sortie de gaz (38 ; 138), ce qui fait que le gaz auxiliaire est guidé dans une voie hélicoïdale le long de la surface d'enveloppe de la cavité (12 ; 112) vers le raccord de sortie de gaz (38 ; 138).

3. Dispositif selon la revendication 1 ou 2, **caractérisé en ce qu'**un corps de remplissage (28 ; 128) de plus petit diamètre et de conicité similaire est disposé coaxialement dans la cavité (12 ; 112), ce qui fait que cette dernière présente la forme d'un tronc de cône creux avec une largeur entre parois approximativement constante.

4. Dispositif selon la revendication 3, **caractérisé en ce que** le corps de remplissage (28 ; 128) s'étend presque jusqu'à hauteur du raccord d'entrée de gaz auxiliaire (18 ; 118).

5. Dispositif selon la revendication 3 ou 4, **caractérisé en ce que** le corps de remplissage (28) est fixé dans la cavité (12) au moyen d'un élément d'étanchéité (26) qui ferme de manière étanche la cavité (12) à proximité du raccord de sortie de gaz (38) et le corps de remplissage (28) est creux et ouvert vers le raccord de sortie de gaz (38), et comporte au moins une ouverture de passage (32) latérale pour le gaz.

6. Dispositif selon la revendication 5, **caractérisé en ce que** la (les) ouverture(s) de passage (32) présentent la forme d'une fente allongée s'étendant parallèlement ou obliquement par rapport à l'axe médian (24) du corps de remplissage (28).

7. Dispositif selon la revendication 5 ou 6, **caractérisé en ce que** l'élément d'étanchéité (26) est réalisé en tant qu'isolateur électrique, et il est prévu une alimentation en tension continue (36) qui charge électrostatiquement le corps de remplissage (28) par rapport à la paroi de la cavité (12).

8. Dispositif selon l'une des revendications 5, 6 ou 7, **caractérisé en ce qu'**une ouverture de sortie (34) est prévue directement devant l'élément d'étanchéité (26) dans la paroi de la cavité (12).

9. Dispositif selon la revendication 8, **caractérisé en ce qu'**il est prévu une seule ouverture de passage (32) dans le corps de remplissage (28), et l'ouverture de sortie (34) est disposée face au côté du corps de remplissage (28), qui est à l'opposé de l'ouverture de passage (32).

10. Dispositif selon l'une des revendications précédentes, **caractérisé en ce qu'**au droit du raccord d'entrée de gaz (14) il est prévu un diaphragme (16) ou un gradin qui réduit la section transversale de la cavité (12).

11. Dispositif selon l'une des revendications précédentes, **caractérisé en ce que** l'ouverture d'entrée de gaz auxiliaire (18) est pourvue d'une tuyère (20).

12. Dispositif selon l'une des revendications précédentes, **caractérisé en ce que** le raccord d'entrée de gaz et le raccord de sortie de gaz (14, 38) sont disposés chacun au centre dans une surface de couverture de la cavité (12) de forme tronconique.

13. Dispositif selon la revendication 2 ou l'une des revendications suivantes, **caractérisé en ce que** l'axe médian de l'ouverture d'entrée de gaz auxiliaire (18) forme, avec l'axe médian (24), dirigé vers l'ouverture de sortie de gaz (38), de la cavité (12), un angle α de 90,5° à 100°, de préférence de 90,5° à 92°.

14. Dispositif selon l'une des revendications précédentes, **caractérisé en ce que** l'angle β de la pente des éléments de forme conique (cavité(12) et éventuellement corps de remplissage (28)) est compris entre 0,5° et 15°, de préférence entre 1° et 5°.

15. Dispositif selon l'une des revendications précédentes, **caractérisé en ce que** sur la surface d'enveloppe de la cavité (12) sont prévues des résistances de chauffage électriques pour l'élimination par combustion des matières solides séparées du courant gazeux.

16. Dispositif selon la revendication 15, **caractérisé en ce que** les résistances de chauffage électriques sont réalisées en tant qu'enroulements chauffants hélicoïdaux ou bandes chauffantes s'étendant dans la direction d'écoulement du gaz auxiliaire.

17. Dispositif selon l'une des revendications précédentes, **caractérisé en ce qu'**un tube d'aspiration (40) s'étend dans la cavité (12), le long de l'axe médian (24) de la cavité (12), depuis le raccord de sortie de gaz (38).

18. Dispositif selon la revendication 17 et la revendication 5, **caractérisé en ce que** le tube d'aspiration (40) s'étend à l'intérieur du corps de remplissage (28) et, à l'intérieur du corps de remplissage (28), il s'étend jusqu'à proximité de l'extrémité côté entrée de gaz du corps de remplissage (28).

19. Dispositif selon la revendication 18, **caractérisé en ce que** dans le tiers de la longueur, côté entrée de gaz, de l'ouverture ou des ouvertures de passage latérales (32), il est prévu une garniture d'étanchéité (44) entre le corps de remplissage (28) et le tube d'aspiration (40).

20. Dispositif selon la revendication 3 ou 4, **caractérisé en ce que** le corps de remplissage (128) est pourvu, à son extrémité avant, d'une tête (129) qui est séparée du reste du corps de remplissage (128) par un étranglement (133).

21. Dispositif selon la revendication 20, **caractérisé en ce que** l'étranglement (133) présente un diamètre qui est inférieur à 1/3 du diamètre de la tête (129).

22. Dispositif selon la revendication 20 ou 21, **caractérisé en ce que** le diamètre de la tête (129) est supérieur au diamètre du corps de remplissage (128) dans sa zone conique.

23. Dispositif selon l'une des revendications 20, 21 ou 22, **caractérisée en ce que** la tête (129) est réalisée en tant que cylindre plat dont la surface d'enveloppe présente la même conicité que le corps de remplissage (128), et la tête (129) se termine vers l'avant par un cône plat.
